# NEW EUROPEAN PATENT SPECIFICATION

(11) **EP 3 388 697 B2**
(45) Date of publication and mention of the opposition decision: **20.08.2025**
(45) Mention of the grant of the patent: 01.12.2021
(21) Application number: 17305443.8
(22) Date of filing: 13.04.2017
(51) Int. Cl.: F16B 31/02, H01R 4/36, F16B 1/00, F16B 33/02

(54) **SHEARABLE FASTENER BOLT AND METHOD FOR CLAMPING ELECTRIC WIRES, AND ELECTRIC CONNECTOR COMPRISING A ZERO-PROTRUSION SHEARABLE FASTENER**
ABREISSBARER BEFESTIGUNGSBOLZEN UND VERFAHREN ZUM EINSPANNEN ELEKTRISCHER DRÄHTE SOWIE ELEKTRISCHER VERBINDER MIT EINEM ABREISSBAREN BOLZEN OHNE VORSPRUNG
BOULON DE FIXATION CISAILLABLE ET PROCÉDÉ DE SERRAGE DE FILS ÉLECTRIQUES ET CONNECTEUR ÉLECTRIQUE COMPRENANT UN DISPOSITIF DE FIXATION CISAILLABLE À ZÉRO-PROTRUSION

(43) Date of publication of application: 17.10.2018
(73) Proprietor: Tyco Electronics SIMEL, 21220 Gevrey-Chambertin (FR)
(72) Inventor: Peltier, Bruno, 21850 St Apollinaire (FR); Dossmann, Julien, 21220 Gevrey-Chambertin (FR)
(74) Representative: Grünecker Patent- und Rechtsanwälte PartG mbB

(56) References cited:
- EP-A1- 1 460 278
- EP-A1- 2 322 816
- EP-A1- 2 498 338
- EP-A1- 2 498 339
- EP-A1- 2 846 052
- EP-A1- 2 846 052
- EP-A2- 2 657 548
- WO-A1-03/067102
- WO-A1-95/25229
- GB-A- 2 299 640
- US-A1- 2012 202 393

## Description

The invention relates to a fastener bolt, an electric connector and a method for clamping a wire. Electric connectors in which the strands of an electric wire are clamped by means of a fastener bolt are known in the prior art. The fastener bolts are shearable, i.e. designed to break if a predetermined fastening torque that is applied to a drive section of the fastener bolt, is exceeded. One part of the broken fastener bolt remains in the threaded hole and continues to contact and hold the electric wire strands. The other part, including the head of the fastener bolt, is removed.

The shearable design of the fastener bolt serves two purposes. First, the design prevents that the tightening torque becomes too high or too low. If the fastening torque becomes too high, the wire and/or the connector may be damaged. If the tightening torque is too low, a bad contact between the electric wire strands and the connector, and insufficient fixation of the wire in the connector may be the result. Second, the breaking of the fastener bolt prevents that the fastener bolt protrudes from the connector, so that heat shrink tubing may be applied without being torn or damaged. Ideally, the broken fastener bolt only protrudes over a very short length from the connector. The document US 2012202393 describes an arrangement for fastening an electrical conductor having a clamp constructed as a pipe piece of metal and at least one clamping screw for fastening an electrical conductor in the clamp. The clamp has in its wall at least one throughhole provided with a thread for receiving the clamping screw. The clamping screw has a tubular contact part provided with an external thread and adapted to be screwed into the throughhole of the clamp, wherein the contact part has at its one axial end a contact surface for contacting an electrical conductor located in the clamp and along its extension with a circumferential intended breaking point a significant distance from the contact surface. The document EP1 460 278 describes a screw having a head region with a tool-engagement surface, and a threaded region with an outer thread and a bore. In the bore, circular grooves concentric to the longitudinal axis are made in the wall. The grooves can be arranged equidistantly in the axial direction or at different distances. In an example, the diameter of the grooves decreases continuously from the end remote from the head region to the end near the head region. Instead of the spaced-apart and separated grooves, a single-start or multiple-start cylindrical or conical thread can also be introduced into the wall, the pitch and/or direction of rotation of which is preferably different from the external thread of the shear bolt.

In EP 1 911 981 A2, a solution is provided, in which a bolt is screwed into a shearable sleeve having an external thread and an axially varying wall thickness. Although this configuration reduces the protrusion of the sheared bolt, the actual location of the break cannot be predicted accurately. Moreover, the break may be located in the part, where the external thread of the sleeve is engaged. This may weaken the connection of the sleeve to the threaded hole. Although the existing shearable fastener bolts provide a satisfactory solution, they suffer from drawbacks. The main drawback being is that a zero protrusion cannot be guaranteed with the existing designs. Further, the tightening torque for electric stranded wires having a small diameter needs to be larger than for electric standard wires having a large diameter. Thus, a single predetermined breaking point is not useful if the fastener bolt and the connector have to be applied over a wide range of different wire diameters.

The present invention aims to provide a solution for both a shearable fastener bolt, an electric connector and a method for clamping an electric wire that does not have these drawbacks. According to the invention, these problems are solved by the subject matter of claims 1, 2 and 9.

The method according to the invention is described in claim 12 comprises the steps of screwing a nut onto a fastener bolt, screwing a nut part onto a shearable fastener bold having a head section, screwing the fastener bolt into a threaded hole and tightening the fastener bolt against the electric wire by applying a fastening torque to the head section, automatically shearing off the head section when the fastening torque exceeds a predetermined fastening torque, tightening the nut part against a wall surrounding the threaded hole by applying a fastening torque to the nut part and automatically breaking the bolt between the threaded hole and the nut part when a predetermined tensile breaking strength of the thread section is exceeded due to the fastening torque acting on the nut part.

This solution provides a safe breaking off of the threaded section of the fastening bolt just above the threaded hole as this is the section where tensile stresses are strongest if the nut is tightened against the wall. The location of the break is immediately above the threaded hole so that part of the fastener bolt which remains in the threaded hole, barely protrudes from the threaded hole.

Thus, by using both the shearable bolt part and the nut part, i.e. by providing two breaking locations, it is possible to first exert a predetermined force onto the at least one strand to ensure a tight electric connection with a predetermined pressing force. Once this pressing force is reached, the head section of the bolt part is sheared off automatically. This gives access to the nut part which is tightened to introduce a tensile force in the bolt section. If the fastening torque acting on the nut part is increased, the tensile stress within the bolt section will build up until, at a predetermined fastening torque, the predetermined tensile break strength of the thread section has been reached. At this, the thread section of the fastener bolt breaks. As tensile stress is maximum in the area of the threaded section just above the threaded hole, between the threaded hole and the nut, breakage will occur there.

At the breakage line, the strength of the bolt section is weakened. This may be achieved by e.g. reducing the wall thickness at the at least one breakage line. To provide a shallow angle, the helix of the breakage line is wound in the opposite direction to the thread, i.e. the handedness of the at least one breakage line is opposite to the handedness of the thread in the thread section. If the thread is left-handed, the breakage line winds in a right-handed direction around the thread section, and vice versa.

Further optional features are mentioned in the dependent claims.

For example, the thread section may be penetrated by a blind hole which may be open at the head section or at a bottom of the thread section of the fastener bolt, respectively, and which in particular may be coaxial to the thread section. If the blind hole is open at the head section, the blind hole penetrates the head section. If the blind hole opens to the bottom of the fastener bolt, it penetrates the bottom. The blind hole reduces the wall thickness in the thread section and thus tensile strength. To obtain a predetermined tensile strength, the wall thickness in the thread section may be configured to provide the predetermined tensile break strength. Calibration of the wall thickness can be done empirically by running tests on a variety of fastener bolts having different wall thicknesses or by numerical simulations. The wall thickness in the thread section may vary in the axial direction, in particular linearly. This can be obtained by having a conical through or blind hole.

According to another embodiment, the shearing portion may comprise at least one groove, which preferably is continuous in the circumferential direction. The material thickness of the bolt part may be reduced in the radial direction beneath the bottom of the groove as compared to the immediate neighborhood of the groove.

The groove may be aligned with a bottom surface of the head section, in particular, the bottom surface of the head section may continue preferably seamlessly as one wall of the groove, the wall facing in the axial direction towards the thread section. The bottom of the head section is preferably planar and oriented perpendicular to the axial direction towards the thread section. Between the shearing portion and the thread section, a shoulder may be arranged, which has an outer diameter which is at least as large as the outer diameter, e.g. the major diameter, of the thread section. Beneath the shoulder, the wall thickness of the bolt section is increased with respect to at least one of the thread section and the area beneath the groove in the radial direction.

The head section and the nut part preferably have an identical drive section with the drive shape being located preferably on the external circumferential, i.e. radially facing, face of both the head section and the nut part. The drive section can e.g. be an external hex, square or any other external shape adapted to transfer the fastening torque applied to the head and/or the nut onto the thread section.

If the fastener bolt is tightened using a tool against the at least one wire strand, it is preferred that tool engages the nut pat and the head section simultaneously. This configuration allows reducing the height of the fastener bolt as no extra length is needed for keeping the nut part at a distance from the head section in order not to interfere with the tightening of the fastener bolt. For this, the drive portion of the head section and of the nut part are aligned according to claim 1 if the nut part rests against the head section. To achieve this reliably, the thread section may have a defined thread cut which, in each of a plurality of fastener screws, starts at the same angular position with respect to the drive portion of the head section.

In another embodiment, the nut part may have a protrusion protruding axially from a bottom of the nut part i.e. facing away from the head section, when the nut part is screwed onto the thread section. The protrusion may in particular be a ring-like collar. At its inner side, the protrusion may be threaded. In particular, the inner thread of the protrusion may continue the inner thread of the remaining nut section.

The outer diameter of the protrusion is preferably smaller than the outer diameter of the nut part. If the nut part is tightened against the wall of the connector on the thread section of the bolt part, it may thus rest on the protrusion and not on the bottom surface. If the footprint of the protrusion is smaller than the footprint of the nut part, the wall section does not need to provide a large resting area. This allows designing a compact connector. The reduced resting area further lowers friction so that the forces needed to break the fastener bolt at the thread section are reduced.

The breakage line may be located on an interior or exterior wall of the threaded section. If it is located on an interior wall of the thread section, the breakage line may be located on the wall of the through or blind hole.

The at least one breakage line may in particular comprise at least one groove on the outside of the thread. The groove may only extend through the crests of the thread, its bottom being aligned with the bottom of the roots of the thread. In another variant, the groove may also extend in the roots of the thread or the groove may have smaller depth than the roots of the thread. All these forms can be combined in a single breakage line. The breakage line may, in one embodiment, a series of linearly aligned grooved.

The at least one breakage line preferably extends over the whole length of the thread section. However, the breakage line can also be limited to only a part of the thread section. Preferably, two or more breakage lines cross a given cross-section of the thread section.

The at least one breakage line serves to define the direction of the break resulting from the tensile force exerted by the nut section. In almost all instances, the break will initially follow the root of the thread, as, there, wall thickness is lowest and stress is concentrated. In order to complete the break, however, the breakage line has to cross the crest of the thread and return to the crest where the break initiated. The breakage line guides the break through the crest of the thread and thus determines the angle at which the break passes the crest. If the angle is shallow, sharp edges can be avoided.

According to claim 2, the pitch of the breakage line is larger than the thread pitch. The at least one breakage line and a thread may cross in an angle which is preferably less than 50°, more preferably less than 30°, wherein the angle is located in the quadrant of the intersection which facing in the screw-in direction and facing towards the head section.

The invention further relates to an electric connector comprising a receptacle for receiving at least one strand of an electric wire, a threaded hole in a wall which opens into the receptacle and reaches through the wall. The electric connector further comprises a fastener bolt according to one of the embodiments described above. The threads of the fastener bolts and the hole are compatible, so that the fastener bolt may be screwed into the hole. The wall may be located adjacent the receptacle and in particular may form a cylindrical sleeve.

The threaded hole may terminate in an unthreaded section on the side facing away from the receptacle, the unthreaded section having a height of at least one pitch in the axial direction. The height of the unthreaded section may be at most 1.5 to 2 pitches.

According to claim 9 the planar and preferably annular resting area is provided at the wall facing away from the receptacle. The resting area surrounds the threaded hole and extend perpendicular to the axial direction. The shape of the rest area is preferably complementary to the protrusion of the nut part, so that the protrusion may rest on the resting area when the nut part is tightened. The rest area may have a width in the radial direction which may correspond to the wall thickness of the thread section and be in the range of 1 mm to 3 mm.

The resting area is surrounded by a preferably unthreaded and preferably ring-like shoulder. The inner diameter of the shoulder preferably is larger than the outer deamter of the protrusion, so that the protrusion of the nut part can be accommodated when the nut part is tightened against the wall. The shoulder serves as a protective barrier which shields the break of the remaining thread section from access from the outside once the fastener bolt is broken above the threaded hole. As explained above, the breakage line typically follows the root of the thread for no more than one turn. Thus, it is sufficient to limit the height of the unthreaded shoulder to between 1 and 2, particularly around 1,5 thread pitches. Thus, no sharp edges from the break will protrude radially outwardly beyond the shoulder. This allows applying e.g. heat shrinks without any risk that the heat shrinks are damaged by sharp edges of the break.

In another embodiment, the threaded hole and/or the rest area may be sunk in a trough-like depression having a larger diameter than the hole, the depression being shaped preferably complementary to the bottom of the nut section. The depression may surround the unthreaded section as described above. The depression allows a snug fit of the nut and the connector when the nut part is tightened against the connector to break the remaining thread section of the already sheared-off bolt part. This reduces the surface pressure and allows using soft materials for the connector.

Using the rest area in connection with the collar on the nut part allows concentrating tensile stresses in a small predetermined ring-like are right above the threaded hole in the gap between the thread of nut part and the thread of the threaded hole.

In the following, embodiments of the invention are described exemplarily with reference to the drawings. In the drawings, elements, which correspond to each other with respect to at least one of function and design are marked with the same reference numerals.

From the preceding description, it is clear that features of which the technical effect is not needed for a particular application can be omitted from the embodiments below if that particular effect is not needed. Vice versa, features that have been described above may be added to the embodiments, if the technical effect associated with this particular feature is needed in a particular application.

In the drawings,
Fig. 1 shows a schematic cut view of a fastener bolt not according to the invention but present for illustration purpose only;
Fig. 2 shows a schematic, perspective and partially cut view of an electric connector comprising the bolt of Fig. 1 in a first operational state;
Fig. 3 shows a schematic, perspective and partially cut view of an electric connector comprising the bolt of Fig. 1 in a second operational state;
Fig. 4 shows a schematic, perspective and partially cut view of an electric connector comprising the bolt of Fig. 1 in a third operational state;
Fig. 5 shows a schematic, perspective and partially cut view of an electric connector comprising the bolt of Fig. 1 in a fourth operational state;
Fig. 6 shows a schematic, perspective and partially cut view of an electric connector comprising the bolt of Fig. 1 in a fifth operational state;
Fig. 7 shows a schematic, perspective and partially cut view of an electric connector comprising the bolt of Fig. 1 in a sixth operational state;
Fig. 8 shows a schematic cut view of a threaded hole of the electric which can be used together with a shearable fastener bolt according to the invention;
Fig. 9 shows a schematic perspective view of the fastener bolt according to the invention; and
Fig. 10 shows a schematic, perspective and partially cut view of a fastener bolt according to the invention.

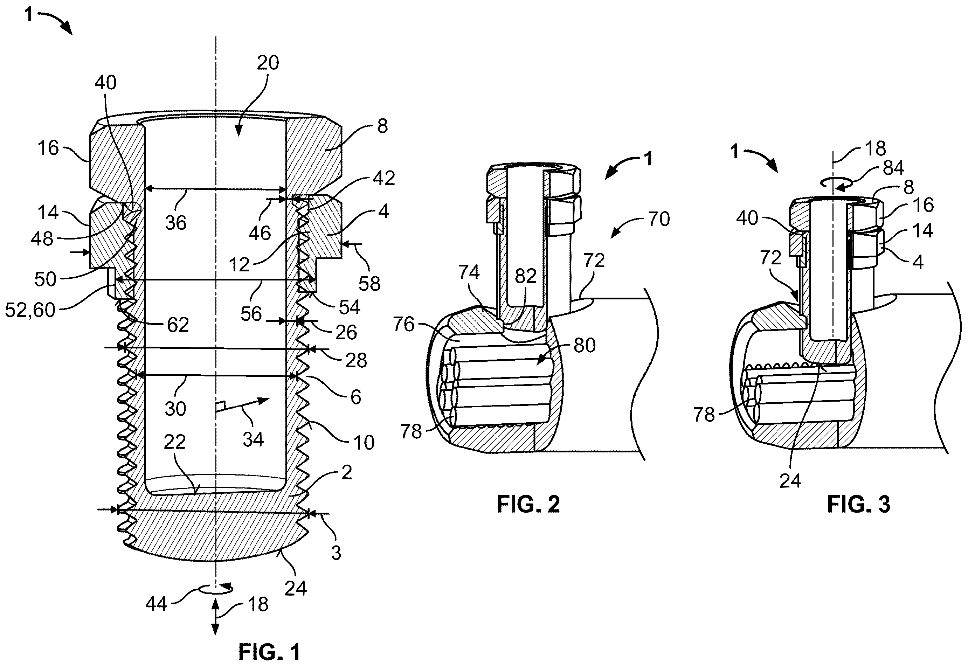

First, the design and function of a fastener bolt 1 are explained with reference to Fig. 1. The fastener bolt 1 comprises two different parts, namely a bolt part 2 and a nut part 4. The nut part 4 can be screwed onto a thread section 6 of the bolt part, until the nut part 4 rests against a head section 8 of the bolt part 2. The thread section 6 is provided with an external thread 10, the nut part 4 with an internal thread 12 which matches the external thread 10.

The nut part 4 is provided with an external drive section 14, such as an external hex or square. The head section 8 is preferably also provided with an external drive section 16 which preferably is identical to the external drive section 14 of the nut part 4.

If the nut part 4 is in an axial direction 18, moved against the head section 8, the drive sections 14, 16 are preferably aligned. This is achieved by a matching start of the thread 10 which considers the dimensions of the nut part 4.

The bolt part 2 is provided with a blind hole 20. As shown in Fig. 1, the blind hole 20 may extend through the head section 8 into the thread section 6 coaxially to the axial direction 18. A bottom 22 of the blind hole 20 is located between one and five thread pitches in the axial direction spaced apart from a bottom 24 of the thread section 6 opposite the head section 8. The bottom 24 of the thread section 6 may be convex, i.e. having a dome shape and may, generally, have any appropriate shape depending on the particular application. In another variant, the blind hole 20 may extend through the bottom 24 of the thread section 6, so that its bottom is located in or close to the head section 8. In still another variant, the bolt 1 may be completely hollow, i.e. sleeve-like. In this case a through hole 20 (not shown) is provided.

The blind hole 20 leaves a wall thickness 26 in the thread section 6 which is configured to withstand a predetermined tensile breaking stress. In other words, the thread section 6 has a tensile break strength which is determined by the wall thickness 26. In this respect, it is not important whether the wall thickness 26 is measured at a pitch diameter 28 of the thread 10 or at a minor diameter 30 or a major diameter 32 of the thread 10. Independently of the thread geometry it is important that the predetermined tensile break strength is obtained within given tolerances. The wall thickness 26 is measured in a radial direction 34 and determined by the diameter 36 of the blind hole 20.

The bolt part 2 is further provided with a shearing section 40, which may be a groove 42 which is continuous in a circumferential direction 44 around the axial direction 18. A wall thickness 46 of the bolt part 2 underneath a bottom of the groove 42 in the radial direction 34 is smaller than the wall thickness 26 in the thread section 6.

In the shearing section 40, breaking resistance of the bolt part 2 against shear stress is reduced as compared to its immediate surroundings. The shearing section 40 is preferably arranged between the thread section 6 and the head section 8. For example, a bottom surface 48 of the head section 8 facing towards the thread section 6 in the axial direction 18 may continue preferably seamlessly as a wall of the groove 42.

Between the shearing section 40 and the thread section 6, a shoulder 50 may be arranged. The shoulder 50 does not have a thread and preferably has a diameter which is larger than the minor diameter 30 of the thread 10.

The shearing section 40 is designed to have a predetermined shear breaking strength. If the shear breaking strength is exceeded, the bolt part 2 will break at the shearing section. This will happen if a fastening torque which is applied to the drive section 16 of the head section 8 exceeds a predetermined value.

The nut part 4 may comprise a protrusion 52 which protrudes from a bottom surface in the axial direction. An outer diameter 56 of the protrusion 52 is preferably smaller than an outer diameter 58 of the drive section 14. The protrusion 52 may be a ring-shaped collar 60. The internal thread 12 of the nut part 4 may continue on the protrusion 52. A bottom 62 facing in the axial direction 18 away from the head section 8 is preferably planar and perpendicular to the axial direction 18.

In Fig. 2, an electric connector 70 is shown which comprises the fastener bolt 1 as described above. The fastener bolt 1 is screwed into a threaded hole 72 in a wall 74 of the connector 70. The connector 70 further comprises a receptacle 76 for receiving at least one or, as shown, a plurality of wire strands 78 of a stranded electric wire 80 from which electric insulation has been removed.

As exemplarily shown in Fig. 2, the receptacle 76 may be a circular opening which is surrounded by the wall 74. Of course, other configurations are possible. For example, the receptacle 76 may have a polygonal and/or generally rounded cross-section. Further, a separate wall (not shown) may be situated opposite the wall 74.

The fastener bolt 1 is used to be tightened against the at least one wire strand 78 so that both a tight mechanical and tight electric connection between the wire strand 78 and the connector 70 is generated. How this is done is further explained with reference to Fig. 3. In this context it is to be noted that the threads 10, 12 as well as an internal thread 82 of the threaded hole 72 are not shown for simplicity.

In order to press the bottom 24 fastener bolt 1 against the at least one wire strand 78, a fastening torque 84 is generated around the axial direction by e.g. a tool which engages the drive section 16 of the head section 8, preferably both the drive section 16 and the drive section 14 of the nut part 4.

The fastening torque 84 drives the fastening bolt 1 into the receptacle 76 against the at least one wire strand 78. Once the bottom 24 of the fastener bolt 1 rests against the at least one wire strand 78, pressure exerted on the at least one wire strand 78 is increased by increasing the fastening torque 84. If more than one wire strand 78 is provided, increasing the pressure compresses the single wire strand and eliminates gaps between the individual strands, thus decreasing any transitional electric resistances and effecting tighter mechanical connection.

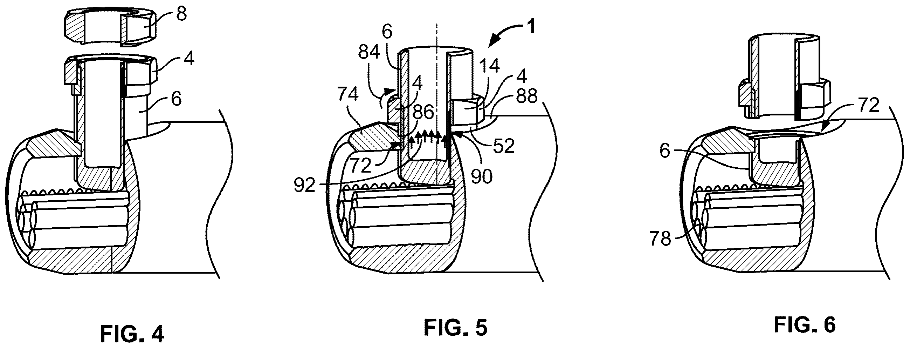

The fastening torque 84 works against the resistance both in the threaded hole 72 as well as the resistance of the at least one wire strand 78 against elastic and plastic deformation. At one point during the further tightening of the fastener bolt, the predetermined fastening torque and the predetermined shear breaking strength at the shearing section 40 will be exceeded. If this happens, the head section 8 separates from the thread section 6 along the shearing section 40. The nut part 4 remains on the thread section 6. This is shown in Fig. 4.

The next steps are performed to break the thread section 6 as close as possible above the threaded hole 72. This is explained with reference to Figs. 5 to 7.

Once the head section 8 has broken off, the nut part 4 is tightened against the wall 74. The protrusion 52 thereby comes to rest against a resting area 86 which surrounds the threaded hole 72 on the side of the wall 74 facing away from the receptacle 76 and/or facing the fastener bolt 1. The resting area 86 may at least be one of planar and annular. In particular the resting area 86 is shaped complementary to the bottom 62 of the protrusion.

The threaded hole 72 and/or the resting area 86 may be surrounded by a depression 88 which can be trough-like and have a concave cross-section in a cut parallel to the axial direction 18.

By increasing the fastening torque 84, e.g. by applying a tool on the drive section 14 of the nut part 4, tensile stresses are generated in the small gap 90 between the internal thread 82 of the threaded hole 72 and the internal thread 12 of the nut part 4. The tensile stresses are symbolically shown as arrows 92 in Fig. 5. If the tensile stress 92 in the gap 90 exceeds the predetermined tensile breaking strength of the thread section 6, the thread section 6 will break. The break occurs in the gap 90, i.e. just above the threaded hole 70, in a root of the thread 10., A part of the thread section 6 remains in the threaded hole 72 and still presses against the at least one wire strand 78. This is shown in Fig. 6. A cap (not shown) made from rubber or resin may be inserted into the blind hole to seal it.

As the break 94 follows the pitch of the thread 10, and as the gap 90 preferably has a maximum length in the axial direction 18 of less than one pitch of the thread 10, the break 94 will not protrude in the axial direction 18 for more than two thread pitches. This height may be covered by the depression 88 so that heat shrink tubes will not be damaged by any potentially sharp edges of the break 94. Further, injuries due to any sharp edges may also be prevented.

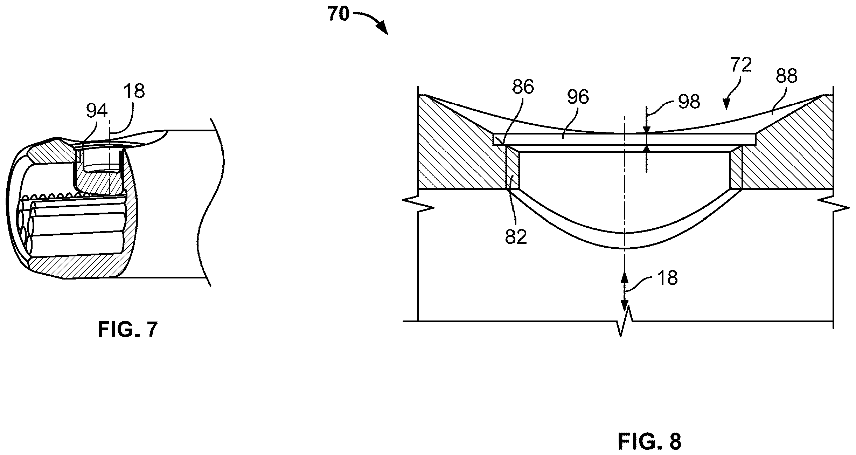

Fig. 8 shows a detail of the threaded hole 72 where, again, the internal thread 82 is not shown for simplicity. The annular resting area 86 which is shaped complementary to the bottom 62 of the protrusion 52 can be seen clearly. The resting area 86 is preferably surrounded by a ring-like shoulder 96 which protrudes away from the threaded hole 72 in the axial direction 18. A height 98 of the shoulder 96 in the axial direction 18 is at least one thread pitch, preferably less than two thread pitches, most preferably around 1.5 thread pitches. This ensures that the break 94 is shielded radially by the shoulder 96 which forms a protective wall around the break 94. The trough-like depression 88 may surround the resting area 86 and the shoulder 96.

By using the combination of protrusion 52 or collar 60, respectively, and the resting area 86, the depression 88 can be shallow so that the connector 70 may remain compact. Further, by having only a small contact surface between the nut part 4 and the wall 74, frictional forces are low and thus, the fastening torque 84 is efficiently translated into tensile stress 92. This allows breaking the thread section 6 without the need of excessive manual force. To decrease the manual force for tightening the nut part 4, one of the bottom surface of the nut and the resting area may be provided with one or more axial protrusions which extend over only a part of the circumference of the threaded hole 72 or the nut part 4 to further reduce the contact area.

As has been said above, the break 94 will follow the pitch of the thread 10. In particular, the break 94 will be generated in a root 100, i.e. valley of the thread 10. It will then follow the root for about one complete turn and then cross the crest 102 of the thread 10 to join with the starting point of the break in the root which is axially adjacent to the break. The crossing of the crest 102 has a high likelihood of generating a sharp edge and thus should take place at a shallow angle.

To guide the break 94 across the crest 102 of the thread 10, at least one breakage line 104 Z is provided. The breakage line 104 is slanted both with respect to the pitch of the thread 10 and with respect to the axial direction 18. The breakage line 104 is a line-like weakening of the tensile break strength of the thread section 6.

The breakage line is preferably limited to the crest 102. For example, the breakage line 104 may be a groove which extends across the crest 102 from one neighboring root 100 to the axially adjacent root 100. The breakage line 104 may in particular be a groove or a series of aligned grooves. The depth of the grooves may correspond to the depth of the root 100 of the thread 10, so that the wall thickness 26 of the thread section 6 is the same in the breakage line 104 as in the roots 100. Of course, the breakage line 104 may also be shallower than a root 100 or deeper.

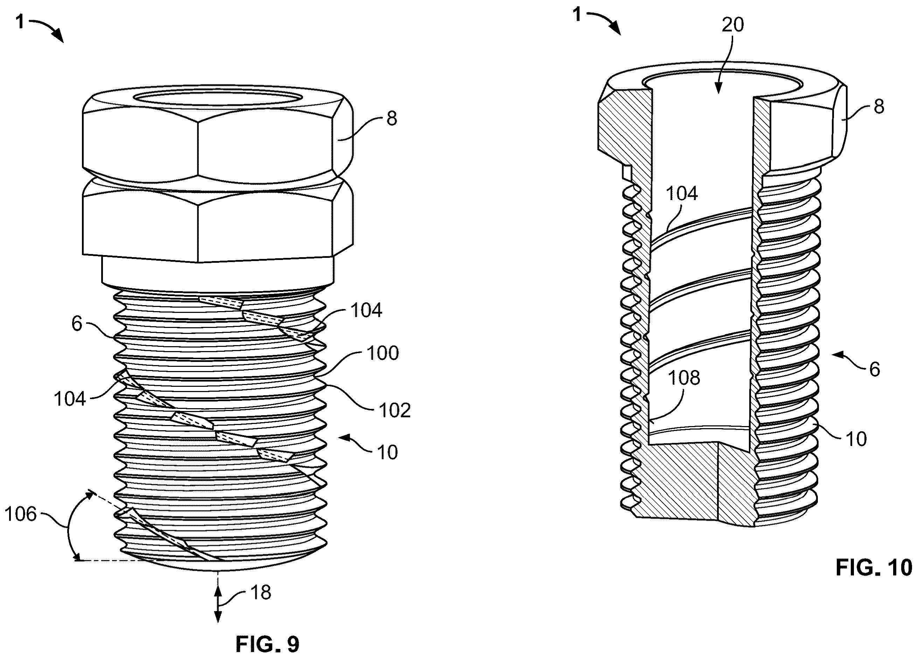

As can be seen from Fig. 9, the at least one breakage line 104 is helical. The handedness of the helix of the breakage line 104 is opposite to the handedness of the thread 10. An angle 106 between the breakage line 104 and a crest 102 may in particular be less than 50°. The angle 106 is measured at the crossing of the breakage line 104 and a crest 102 in the quadrant facing in the turning sense of the screw-in direction and situation towards the head section 8 of the fastener bolt 1.

To reduce the height of the break 94 above the threaded hole 72, it is of advantage if for every 360° turn of a crest 102, there are at least two crossings of a breakage line 104. For example, two or more helical breakage lines may be provided. The pitch of the breakage line 104 is higher by an integer factor than the pitch of the thread 10.

The fastener bolt 1 of Fig. 10 differs from the one shown in Fig. 9 in that the at least one breakage line 104 is located on an inner wall 108 of the thread section 6. The inner wall may be formed by the through or blind hole 20. The layout of the at least one breakage line 104 is the same as the layout of the breakage line 104 of Fig. 9, i.e. the breakage line 104 winds helically around the inner wall 108 and have a handedness which is opposite to the handedness of the external thread 10. Moreover, the pitch of the breakage line 104 may be larger than the pitch of the external thread 6. In particular, the pitch of the breakage line 104 in any embodiment may be between two and five times the pitch of the external thread 6, for example, as shown in Fig. 10, three times the pitch of the external thread 6. If the breakage line 104 is located on the inner wall 108, it is preferably configured as a continuous groove having a V-shaped cross-section.

### REFERENCE NUMERALS

- 1: fastener bolt
- 2: bolt part
- 4: nut part
- 6: thread section
- 8: head section
- 10: external thread in thread section
- 12: internal thread of nut part
- 14: external drive section of nut part
- 16: external drive section of head section
- 18: axial direction
- 20: blind hole
- 22: bottom of blind hole
- 24: bottom of thread section
- 26: wall thickness
- 28: pitch diameter
- 30: minor diameter of thread
- 32: major diameter of thread
- 34: radio direction
- 36: diameter of blind hole
- 40: shearing section
- 42: groove
- 44: circumferential direction
- 46: wall thickness
- 48: bottom surface of head section
- 50: shoulder
- 52: protrusion of nut part
- 54: bottom surface of nut part
- 56: outer diameter of protrusion
- 58: outer diameter of drive section
- 60: collar
- 62: bottom of protrusion
- 70: electric connector
- 72: threaded hole
- 74: wall of connector
- 76: receptacle
- 78: strand of electric wire
- 80: electric wire
- 82: internal thread of threaded hole
- 84: fastening torque
- 86: resting area
- 88: depression
- 90: gap
- 92: tensile stress
- 94: break
- 96: shoulder
- 98: height of shoulder
- 100: root of thread
- 102: crest of thread
- 104: breakage line
- 106: angle between breakage line and crest
- 108: inner wall of thread section

## Claims

1. A shearable fastener bolt (1), in particular for clamping electric wires (80), comprising a bolt part (2) and a nut part (4), the bolt part (2) having a head section (8) and a thread section (6) which are joined by a weakened shearing section (40), the weakened shearing section (40) being configured to break if a predetermined fastening torque (84) is exceeded, the nut part (4) being configured to be screwed onto the thread section (6), wherein the thread section (6) is hollow and has a predetermined tensile breaking strength, **characterized in that** the thread section (6) is provided with at least one breakage line (104) that is slanted with respect to both the thread pitch of the external thread (10) of the thread section (6) and the axial direction (18) and along which the thread section (6) is weakened and **in that** the at least one breakage line (104) is wound helically in a handedness opposite to the thread (10) of the thread section (6), wherein the head section (8) and the nut part (4) comprise identical external drive sections (14, 16) which are aligned if the nut part (4) rests against the head section (8).

2. A shearable fastener bolt (1), in particular for clamping electric wires (80), comprising a bolt part (2) and a nut part (4), the bolt part (2) having a head section (8) and a thread section (6) which are joined by a weakened shearing section (40), the weakened shearing section (40) being configured to break if a predetermined fastening torque (84) is exceeded, the nut part (4) being configured to be screwed onto the thread section (6), wherein the thread section (6) is hollow and has a predetermined tensile breaking strength, **characterized in that** the thread section (6) is provided with at least one breakage line (104) that is slanted with respect to both the thread pitch of the external thread (10) of the thread section (6) and the axial direction (18) and along which the thread section (6) is weakened and **in that** the at least one breakage line (104) is wound helically in a handedness opposite to the thread (10) of the thread section (6), wherein a pitch of the breakage line (104) is larger than the pitch of the thread (10) of the thread section (6).

3. Fastener bolt (1) according to claim 1 or 2, wherein at least a part of the thread section (6) is penetrated by a blind hole (20).

4. Fastener bolt (1) according to any one of claims 1 to 3, wherein the shearing section (40) comprises at least one circumferential groove (42).

5. Fastener bolt (1) according to any one of claims 1 to 4, wherein the nut part (4) has at least one protrusion (52) protruding in an axial direction (18) from a bottom surface (54) of the nut part (4).

6. Fastener bolt (1) according to claim 5, wherein the protrusion (52) is a ring-shaped collar (16) coaxial to the axial direction (18) and having a smaller outer diameter (56) than the drive section (14) of the nut part (4).

7. Fastener bolt (1) according to any one of claims 1 to 6, wherein the at least one breakage line (104) comprises a groove (42) which extends at least across a crest (102) of the thread (10) of the thread section (6).

8. Fastener bolt (1) according to any one of claims 1 to 7, wherein two or more breakage lines (104) cross a given cross-section of the thread section (6).

9. Electric connector (70), in particular for clamping electric wires (80), comprising a receptacle (76) for receiving at least one strand (78) of the electric wire (80), a threaded hole (72) in a wall (74) which opens into the receptacle (76) and penetrates the wall (74), the electric connector (70) further comprising a shearable fastener bolt (1), the fastener bolt comprising a bolt part (2) and a nut part (4), the bolt part (2) having a head section (8) and a thread section (6) which are joined by a weakened shearing section (40), the weakened shearing section (40) being configured to break if a predetermined fastening torque (84) is exceeded, the nut part (4) being configured to be screwed onto the thread section (6), wherein the thread section (6) is hollow and has a predetermined tensile breaking strength, wherein the thread section (6) is provided with at least one breakage line (104) that is slanted with respect to both the thread pitch of the external thread (10) of the thread section (6) and the axial direction (18) and along which the thread section (6) is weakened and wherein the at least one breakage line (104) is wound helically in a handedness opposite to the thread (10) of the thread section (6), and wherein the nut part (4) has at least one protrusion (52) protruding in an axial direction (18) from a bottom surface (54) of the nut part (4),
wherein the fastener bolt (1) is adapted to be screwed into the threaded hole (72),
wherein the threaded hole (72) is surrounded by a planar resting area (86) facing away from the receptacle (76) and configured complementarily to a bottom (62) of a the protrusion (52) of the nut part (4),
and wherein the threaded hole (72) is surrounded by an shoulder (96) protruding away from the receptacle (76) and having a height of less than two pitches of the thread (10) of the threaded section (6).

10. Electric connector (70) according to claim 9, wherein a break (94) is located between the nut part (4) and the threaded hole (72) if the predetermined tensile breaking strength of the thread section (6) is exceeded upon application of a fastening torque (84) on the nut part (4) resting against the wall (74).

11. Method for clamping an electric wire (80) using a fastener bolt (1) according to any of claims 1 to 8, the method the steps of
- screwing a nut part (4) onto shearable a fastener bolt (1) having a head section (8),
- screwing the fastener bolt (1) into a threaded hole (72) and tightening the fastener bolt (1) against the electric wire (80) by applying a fastening torque (84) to the head section (8),
- automatically shearing off the head section (8) of the fastener bolt (1) when the fastening torque (84) exceeds a predetermined fastening torque (84),
- tightening the nut part (4) against a wall (74) surrounding the threaded hole (72) by applying a fastening torque (84) to the nut part (4), and
- automatically breaking the fastener bolt (1) between the threaded hole (72) and the nut part (4) when a predetermined tensile breaking strength of the thread section (6) is exceeded due to the fastening torque (84) acting on the nut part (4).

## Patentansprüche

1. Abscherbare Befestigungsschraube (1), insbesondere zum Festklemmen von Stromleitern (80), die einen Schraubenteil (2) und einen Mutternteil (4) umfasst, wobei der Schraubenteil (2) einen Kopfabschnitt (8) und einen Gewindeabschnitt (6) aufweist, die über einen verdünnten Abscher-Abschnitt (40) verbunden sind, und der verdünnte Abscher-Abschnitt (40) so ausgeführt ist, dass er bricht, wenn ein vorgegebenes Anziehmoment (84) überschritten wird, der Mutternteil (4) zum Aufschrauben auf den Gewindeabschnitt (6) ausgeführt ist, und der Gewindeabschnitt (6) hohl ist und eine vorgegebene Zugfestigkeit aufweist, **dadurch gekennzeichnet, dass** der Gewindeabschnitt (6) mit wenigstens einer Bruchlinie (104) versehen ist, die sowohl bezüglich der Gewindesteigung des Außengewindes (10) des Gewindeabschnitts (6) als auch bezüglich der axialen Richtung (18) schräg verläuft und an der entlang der Gewindeabschnitt (6) verdünnt ist, und dass die wenigstens eine Bruchlinie (104) schraubenförmig in einer Richtung gewunden ist, die dem Gewinde (10) des Gewindeabschnitts (6) entgegengesetzt ist, wobei der Kopfabschnitt (8) und der Mutternteil (4) identische äußere Eingriffsabschnitte (14, 16) aufweisen, die fluchtend sind, wenn der Mutternteil (4) an dem Kopfabschnitt (8) anliegt.

2. Abscherbare Befestigungsschraube (1)), insbesondere zum Festklemmen von Stromleitern (80), die einen Schraubenteil (2) und einen Mutternteil (4) umfasst, wobei der Schraubenteil (2) einen Kopfabschnitt (8) und einen Gewindeabschnitt (6) aufweist, die über einen verdünnten Abscher-Abschnitt (40) verbunden sind, und der verdünnte Abscher-Abschnitt (40) so ausgeführt ist, dass er bricht, wenn ein vorgegebenes Anziehmoment (84) überschritten wird, der Mutternteil (4) zum Aufschrauben auf den Gewindeabschnitt (6) ausgeführt ist, wobei der Gewindeabschnitt (6) hohl ist und eine vorgegebene Zugfestigkeit aufweist, **dadurch gekennzeichnet, dass** der Gewindeabschnitt (6) mit wenigstens einer Bruchlinie (104) versehen ist, die sowohl bezüglich der Gewindesteigung des Außengewindes (10) des Gewindeabschnitts (6) als auch bezüglich der axialen Richtung (18) schräg verläuft und an der entlang der Gewindeabschnitt (6) verdünnt ist, und dass die wenigstens eine Bruchlinie (104) schraubenförmig in einer Richtung gewunden ist, die dem Gewinde (10) des Gewindeabschnitts (6) entgegengesetzt ist, wobei eine Steigung der Bruchlinie (104) größer ist als die Steigung des Gewindes (10) des Gewindeabschnitts (6).

3. Befestigungsschraube (1) nach Anspruch 1 or 2, wobei durch wenigstens einen Teil des Gewindeabschnitts (6) ein Blindloch (20) hindurch verläuft.

4. Befestigungsschraube (1) nach einem der Ansprüche 1 bis 3, wobei der Abscher-Abschnitt (40) wenigstens eine Umfangsnut (42) umfasst.

5. Befestigungsschraube (1) nach einem der Ansprüche 1 bis 4, wobei der Mutternteil (4) wenigstens einen Vorsprung (52) aufweist, der in einer axialen Richtung (18) von einer Unterseite (54) des Mutternteils (4) vorsteht.

6. Befestigungsschraube (1) nach Anspruch 5, wobei der Vorsprung (52) ein zu der axialen Richtung (18) koaxialer ringförmiger Bund (16) ist, der einen kleineren Außendurchmesser (56) hat als der Eingriffsabschnitt (14) des Mutternteils (4).

7. Befestigungsschraube (1) nach einem der Ansprüche 1 bis 6, wobei die wenigstens eine Bruchlinie (104) eine Nut (42) umfasst, die wenigstens über eine Spitze (102) des Gewindes (10) des Gewindeabschnitts (6) verläuft.

8. Befestigungsschraube (1) nach einem der Ansprüche 1 bis 7, wobei zwei oder mehr Bruchlinien (104) einen bestimmten Querschnitt des Gewindeabschnitts (6) kreuzen.

9. Elektrischer Verbinder (70), insbesondere zum Klemmen von Stromleitern (80), der eine Aufnahme (76) zum Aufnehmen wenigstens eines Strangs (78) des Stromleiters (80), ein Gewindeloch (72) in einer Wand (74), das sich in die Aufnahme (76) hinein öffnet und durch die Wand (74) hindurch verläuft, wobei der elektrische Verbinder (70) des Weiteren eine abscherbare Befestigungsschraube (1) umfasst, wobei die Befestigungsschraube einen Schraubenteil (2) und einen Mutternteil (4) umfasst, wobei der Schraubenteil (2) einen Kopfabschnitt (8) und einen Gewindeabschnitt (6) aufweist, die über einen verdünnten Abscher-Abschnitt (40) verbunden sind, und der verdünnte Abscher-Abschnitt (40) so ausgeführt ist, dass er bricht, wenn ein vorgegebenes Anziehmoment (84) überschritten wird, der Mutternteil (4) zum Aufschrauben auf den Gewindeabschnitt (6) ausgeführt ist, der Mutternteil (4) zum Aufschrauben auf den Gewindeabschnitt (6) ausgeführt ist, wobei der Gewindeabschnitt (6) hohl ist und eine vorgegebene Zugfestigkeit aufweist, wobei der Gewindeabschnitt (6) mit wenigstens einer Bruchlinie (104) versehen ist, die sowohl bezüglich der Gewindesteigung des Außengewindes (10) des Gewindeabschnitts (6) als auch bezüglich der axialen Richtung (18) schräg verläuft und an der entlang der Gewindeabschnitt (6) verdünnt ist, und wobei die wenigstens eine Bruchlinie (104) schraubenförmig in einer Richtung gewunden ist, die dem Gewinde (10) des Gewindeabschnitts (6) entgegengesetzt ist, und wobei der Mutternteil (4) wenigstens einen Vorsprung (52) aufweist, der in einer axialen Richtung (18) von einer Unterseite (54) des Mutternteils (4) vorsteht, wobei die Befestigungsschraube (1) zum Einschrauben in das Gewindeloch (72) eingerichtet ist, wobei das Gewindeloch (72) von einem planen Auflagebereich (86) umgeben ist, der von der Aufnahme (76) weg gewandt und komplementär zu einer Unterseite (62) des Vorsprungs (52) des Mutternteils (4) ausgeführt ist, und wobei das Gewindeloch (72) von einer Schulter (96) umgeben ist, die von der Aufnahme (76) weg vorsteht und eine Höhe von weniger als zwei Gängen des Gewindes (10) des Gewindeabschnitts (6) hat.

10. Elektrischer Verbinder (70) nach Anspruch 9, wobei ein Bruch (94) zwischen dem Mutternteil (4) und dem Gewindeloch (72) liegt, wenn die vorgegebene Zugfestigkeit des Gewindeabschnitts (6) beim Ausüben eines Anziehmoments (84) auf den an der Wand (74) anliegenden Mutternteil (4) überschritten wird.

11. Verfahren zum Festklemmen eines Stromleiters (80) unter Verwendung einer Befestigungsschraube (1) nach einem der Ansprüche 1 bis 8, wobei das Verfahren die folgenden Schritte umfasst:
- Aufschrauben eines Mutternteils (4) auf eine abscherbare Befestigungsschraube (1) mit einem Kopfabschnitt (8),
- Einschrauben der Befestigungsschraube (1) in ein Gewindeloch (72) und Anziehen der Befestigungsschraube (1) an den Stromleiter (80) durch Ausüben eines Anziehmoments (84) auf den Kopfabschnitt (8),
- automatisches Abscheren des Kopfabschnitts (8) der Befestigungsschraube (1), wenn das Anziehmoment (84) ein vorgegebenes Anziehmoment (84) überschreitet,
- Anziehen des Mutternteils (4) an eine das Gewindeloch (72) umgebende Wand (74) durch Ausüben eines Anziehmoments (84) auf den Mutternteil (4), sowie
- automatisches Brechen der Befestigungsschraube (1) zwischen dem Gewindeloch (72) und dem Mutternteil (4), wenn eine vorgegebene Zugfestigkeit des Gewindeabschnitts (6) aufgrund des auf den Mutternteil (4) wirkenden Anziehmoments (84) überschritten wird.

## Revendications

1. Boulon de fixation cisaillable (1), en particulier pour le serrage de fils électriques (80), comprenant une partie boulon (2) et une partie écrou (4), la partie boulon (2) comportant une section de tête (8) et une section à filetage (6) qui sont jointes par une section de cisaillement affaiblie (40), la section de cisaillement affaiblie (40) étant configurée pour se rompre si un couple de serrage prédéterminé (84) est dépassé, la partie écrou (4) étant configurée pour être vissée sur la section à filetage (6), dans lequel la section à filetage (6) est creuse et présente une résistance à la rupture en traction prédéterminée, **caractérisé en ce que** la section à filetage (6) est pourvue d'au moins une ligne de rupture (104) qui est oblique par rapport aussi bien au pas de filetage du filetage externe (10) de la section à filetage (6) qu'à la direction axiale (18) et le long de laquelle la section à filetage (6) est affaiblie, et **en ce que** ladite au moins une ligne de rupture (104) est enroulée en hélice en sens opposé au sens du filetage (10) de la section à filetage (6), dans lequel la section de tête (8) et la partie écrou (4) comprennent des sections d'entraînement externes identiques (14, 16) qui sont alignées si la partie écrou (4) repose contre la section de tête (8).

2. Boulon de fixation cisaillable (1), en particulier pour le serrage de fils électriques (80), comprenant une partie boulon (2) et une partie écrou (4), la partie boulon (2) comportant une section de tête (8) et une section à filetage (6) qui sont jointes par une section de cisaillement affaiblie (40), la section de cisaillement affaiblie (40) étant configurée pour se rompre si un couple de serrage prédéterminé (84) est dépassé, la partie écrou (4) étant configurée pour être vissée sur la section à filetage (6), dans lequel la section à filetage (6) est creuse et présente une résistance à la rupture en traction prédéterminée, **caractérisé en ce que** la section à filetage (6) est pourvue d'au moins une ligne de rupture (104) qui est oblique par rapport aussi bien au pas de filetage du filetage externe (10) de la section à filetage (6) qu'à la direction axiale (18) et le long de laquelle la section à filetage (6) est affaiblie, et **en ce que** ladite au moins une ligne de rupture (104) est enroulée en hélice en sens opposé au sens du filetage (10) de la section à filetage (6), dans lequel le pas de la ligne de rupture (104) est supérieur au pas du filetage (10) de la section à filetage (6).

3. Boulon de fixation (1) selon la revendication 1 ou 2, dans lequel au moins une partie de la section à filetage (6) est pénétrée par un trou borgne (20).

4. Boulon de fixation (1) selon l'une quelconque des revendications 1 à 3, dans lequel la section de cisaillement (40) comprend au moins une rainure circonférentielle (42).

5. Boulon de fixation (1) selon l'une quelconque des revendications 1 à 4, dans lequel la partie écrou (4) comporte au moins une protrusion (52) faisant saillie en direction axiale (18) à partir d'une surface de fond (54) de la partie écrou (4).

6. Boulon de fixation (1) selon la revendication 5, dans lequel la protrusion (52) est un collier annulaire (16) coaxial à la direction axiale (18) et ayant un diamètre externe (56) inférieur à celui de la section d'entraînement (14) de la partie écrou (4).

7. Boulon de fixation (1) selon l'une quelconque des revendications 1 à 6, dans lequel ladite au moins une ligne de rupture (104) comprend une rainure (42) qui s'étend au moins à travers une crête (102) du filetage (10) de la section à filetage (6).

8. Boulon de fixation (1) selon l'une quelconque des revendications 1 à 7, dans lequel deux ou plusieurs lignes de rupture (104) traversent une section transversale donnée de la section à filetage (6).

9. Connecteur électrique (70), en particulier pour le serrage de fils électriques (80), comprenant un réceptacle (76) destiné à recevoir au moins un brin (78) du fil électrique (80), un trou fileté (72) ménagé dans une paroi (74) qui débouche dans le réceptacle (76) et pénètre la paroi (74), le connecteur électrique (70) comprenant en outre un boulon de fixation cisaillable (1),
le boulon de fixation comprenant une partie boulon (2) et une partie écrou (4), la partie boulon (2) comportant une section de tête (8) et une section à filetage (6) qui sont jointes par une section de cisaillement affaiblie (40), la section de cisaillement affaiblie (40) étant configurée pour se rompre si un couple de serrage prédéterminé (84) est dépassé, la partie écrou (4) étant configurée pour être vissée sur la section à filetage (6), dans lequel la section à filetage (6) est creuse et présente une résistance à la rupture en traction prédéterminée, dans lequel la section à filetage (6) est pourvue d'au moins une ligne de rupture (104) qui est oblique par rapport aussi bien au pas de filetage du filetage externe (10) de la section à filetage (6) qu'à la direction axiale (18) et le long de laquelle la section à filetage (6) est affaiblie, et dans lequel ladite au moins une ligne de rupture (104) est enroulée en hélice en sens opposé au sens du filetage (10) de la section à filetage (6), et
dans lequel la partie écrou (4) comporte au moins une protrusion (52) faisant saillie en direction axiale (18) à partir d'une surface de fond (54) de la partie écrou (4),
dans lequel le boulon de fixation (1) est adapté pour être vissé dans le trou fileté (72) ;
dans lequel le trou fileté (72) est entouré d'une zone de repos plane (86) opposée au réceptacle (76) et configurée de manière complémentaire au fond (62) de la protrusion (52) de la partie écrou (4), et
dans lequel le trou fileté (72) est entouré d'un épaulement (96) faisant saillie à l'opposé du réceptacle (76) et ayant une hauteur inférieure à deux pas du filetage (10) de la section filetée (6).

10. Connecteur électrique (70) selon la revendication 9, dans lequel une rupture (94) est située entre la partie écrou (4) et le trou fileté (72) si la résistance à la rupture en traction prédéterminée de la section à filetage (6) est dépassée lors de l'application d'un couple de serrage (84) sur la partie écrou (4) reposant contre la paroi (74).

11. Procédé de serrage d'un fil électrique (80) à l'aide d'un boulon de fixation (1) selon l'une quelconque des revendications 1 à 8, le procédé comprenant les étapes suivantes :
- vissage d'une partie écrou (4) sur un boulon de fixation cisaillable (1) ayant une section de tête (8),
- vissage du boulon de fixation (1) dans un trou fileté (72) et serrage du boulon de fixation (1) contre le fil électrique (80) en appliquant un couple de serrage (84) à la section de tête (8),
- cisaillement automatique de la section de tête (8) du boulon de fixation (1) quand le couple de serrage (84) dépasse un couple de serrage prédéterminé (84),
- serrage de la partie écrou (4) contre une paroi (74) entourant le trou fileté (72) en appliquant un couple de serrage (84) à la partie écrou (4), et
- rupture automatique du boulon de fixation (1) entre le trou fileté (72) et la partie écrou (4) quand une résistance à la rupture en traction prédéterminée de la section à filetage (6) est dépassée en raison du couple de serrage (84) agissant sur la partie écrou (4).
